# EUROPEAN PATENT SPECIFICATION

(11) **EP 2 174 480 B1**
(45) Date of publication and mention of the grant of the patent: **28.09.2016**
(21) Application number: 07786577.2
(22) Date of filing: 06.08.2007
(51) Int. Cl.: H04L 29/12, H04W 40/22, H04W 84/18, H04L 12/18, H04W 8/26, H04W 40/20

(54) **METHOD FOR AUTOMATIC ADDRESS CONFIGURATION IN A MOBILE AD HOC NETWORK (MANET)**
VERFAHREN ZUR AUTOMATISCHEN ADRESSENKONFIGURATION IN EINEM MOBIL-AD-HOC-NETZ (MANET)
PROCÉDÉ DE CONFIGURATION D'ADRESSE AUTOMATIQUE DANS UN RÉSEAU AD HOC MOBILE (MANET)

(43) Date of publication of application: 14.04.2010
(73) Proprietor: NEC CORPORATION, Tokyo 108-8001 (JP)
(72) Inventor: BALDESSARI, Roberto, 69121 Heidelberg (DE); FESTAG, Andreas, 68526 Ladenburg (DE)
(74) Representative: Patent- und Rechtsanwälte Ullrich & Naumann
(86) International application number: PCT/EP2007/006931
(87) International publication number: WO 2009/018835

(56) References cited:
- THOMSON CISCO T NARTEN IBM T JINMEI TOSHIBA S: "IPv6 Stateless Address Autoconfiguration; draft-ietf-ipv6-rfc2462bis- 08.txt" IETF STANDARD-WORKING-DRAFT, INTERNET ENGINEERING TASK FORCE, IETF, CH, vol. ipv6, no. 8, 12 May 2005 (2005-05-12), XP015045094 ISSN: 0000-0004
- DE RANGO F ET AL: "Multi-step increase of the forwarding zone for LAR protocol in ad hoc networks" VTC 2003-SPRING. THE 57TH. IEEE SEMIANNUAL VEHICULAR TECHNOLOGY CONFERENCE. PROCEEDINGS. JEJU, KOREA, APRIL 22 - 25, 2003, IEEE VEHICULAR TECHNOLGY CONFERENCE, NEW YORK, NY : IEEE, US, vol. VOL. 4 OF 4. CONF. 57, 22 April 2003 (2003-04-22), pages 186-190, XP010862120 ISBN: 0-7803-7757-5
- MAUVE M AND WIDMER J: "A survey on position-based routing in mobile ad hoc networks" IEEE NETWORK, IEEE SERVICE CENTER, NEW YORK, NY, US, vol. 15, no. 6, November 2001 (2001-11), pages 30-39, XP002988602 ISSN: 0890-8044
- FAN Z ET AL: "An address autoconfiguration protocol for IPv6 hosts in a mobile ad hoc network", COMPUTER COMMUNICATIONS, ELSEVIER SCIENCE PUBLISHERS BV, AMSTERDAM, NL, vol. 28, no. 4, 16 March 2005 (2005-03-16) , pages 339-350, XP027760580, ISSN: 0140-3664 [retrieved on 2005-03-16]
- NARTEN IBM E NORDMARK SUN MICROSYSTEMS W SIMPSON DAYDREAMER T: "Neighbor Discovery for IP Version 6 (IPv6); rfc2461.txt", 19981201, 1 December 1998 (1998-12-01), XP015008245, ISSN: 0000-0003

## Description

The present invention relates to a method for automatic address configuration in a mobile ad hoc network (MANET), wherein the network comprises one or more mobile communication nodes, the mobile communication nodes being aware of their geographic position, as well as one or more attachment points providing access to an external network, and wherein the attachment points broadcast IP (Internet Protocol) signaling messages containing the network prefix assigned to their served link.

Mobile Ad Hoc Networks (MANETs) are self-organizing, infrastructure-free and, in general, highly dynamic wireless networks based on short range communication devices and wireless multi-hop technology. MANETs have gained attention in recent years and are moving towards first large-scale deployments.

When connected to an infrastructure network (e.g. the Internet) via one or more gateways, communication nodes in the MANET need to configure a globally valid address (which is unique and routable) and select a gateway in order to communicate with peers in the infrastructure network. Due to MANETs dynamic and unstructured physical topology, standard address configuration mechanism (e.g. DHCP (Dynamic Host Configuration Protocol), IPv6 SLAAC (StateLess Address AutoConfiguration)) can not be applied or adopted, as they rely on hierarchical and permanent topologies.

In Vehicular Ad-hoc Networks (VANETs), a particular type of MANET dedicated primarily to traffic safety applications, the difficulty to apply address autoconfiguration schemes is increased due to the high mobility and the potential huge number of vehicles participating in the network as communication nodes. However, VANETs are expected to provide new peculiar services when connected to public network infrastructure, like the Internet, by means of dedicated Road Side Units (RSU). For example, many onboard infotainment applications require access to the Internet, in contrast to many safety applications which typically use direct and local communication among neighboring vehicles/communication nodes ("information processed and consumed where generated").

For the purpose of automatic address configuration, MANET nodes need first to select a point-of-attachment if more than one is available, and next to acquire a globally valid address. IPv6 SLAAC offers already a scalable mechanism suitable for mobile environments, but it relies on the concept of "link" as direct physical connection between an Access Router (AR) and its served nodes. In ad-hoc networks, the radio coverage is extended by means of wireless multi-hop technology, so that nodes can be connected to gateways through other nodes. As a consequence, the concept of link is extended, and the address configuration procedure needs to be adapted. Nevertheless, standard protocols should not be modified intensively, in order to reuse existing wide-spread implementation and reduce deployment complexity, which is a crucial factor in potentially large networks like VANETs.

Existing approaches for MANET-specific procedures, as described for example in M. Fazio et al. "Automatic IP Address Configuration in VANETs", in Proceedings of the 3rd international workshop on Vehicular ad hoc networks, VANET'06, Los Angeles, CA, USA, Sep 2006*,* mainly adopt hierarchal schemes in which selected vehicles act as leaders being responsible for address management. The approaches extend the concept of link to a certain multi-hop scope, define algorithms for gateway selection and duplicate address detection (e.g. MANET-DAD), network partitioning and merging. All these operations require extensive signaling and pose issues concerning scalability and security.

It is therefore an object of the present invention to improve and further develop a method of the initially described type for automatic address configuration in a mobile ad hoc network in such a way that by employing mechanisms that are readily to implement the required signaling is significantly reduced and scalability is assured.

In accordance with the invention, the aforementioned object is accomplished by a method comprising the features of claim 1. According to this claim, such a method is characterized in that geographic areas are specified, each area being associated with at least one of said attachment points, and that a position-based routing protocol is implemented for forwarding the signaling messages broadcasted by the attachment points to the communication nodes within the corresponding geographic area, wherein the communication nodes generate an IP address on the basis of the network prefix contained in the received signaling message.

According to the invention it has been recognised that complex hierarchical approaches based on the specification of certain leader nodes can be obviated by applying a combination of specifying geographic areas in the ad-hoc network with the employment of a position-based routing protocol. According to the invention geographic areas are specified wherein each area is associated with at least one attachment point (e.g. by specifying the geographic area as parameter in the attachment point). The signaling messages which are periodically broadcasted by the attachment points and which contain the corresponding network prefix, are standard IPv6 signaling messages called Router Advertisements (RA). According to the invention, these signaling messages are disseminated to the communication nodes which are located in the corresponding geographic area by means of multi-hop forwarding relying on the position-based routing protocol. Insofar the geographic areas are used as broadcast domains, in particular as IPv6 broadcast domains, associated to attachment points. The network prefix contained in the signaling messages broadcasted by the attachment points is thus mapped to a specific geographic area. According to the invention only the communication nodes located within that geographic area receive the signaling message and then, for example by adopting standard IPv6 SLAAC, extract the network prefix contained in the received signaling message and employ this network prefix in order to generate their own IP address.

By applying a georouting (or position-based routing, PBR) mechanism in combination with the definition of specified geographic areas it is assured that all communication nodes within a specified geographic area receive the respective network prefix mapped to that specific geographic area and, moreover, that the signaling message is not distributed to communication nodes located outside the specified geographic area. Consequently, the configuration of globally valid unique IP addresses is enabled. In addition to network prefix distribution and gateway selection, the geographic partitioning of the ad hoc network allows for facilitated layer 3 handovers in the case that IPv6 Mobility Support is used. As regards the position-based routing any known position-based routing protocol may be employed, by way of example it is to be referred to the PBR protocols mentioned and discussed in the article "A survey on position-based routing in mobile ad hoc networks", by M. Mauve et al., IEEE Network Magazine, Volume 15, Issue 6, Nov/Dec 2001, pp. 30-39.

The method according to the invention enables an automatic address configuration in mobile ad hoc networks without the need for applying hierarchical structures, i.e. without the need of certain leader nodes. With respect to the address configuration all communication nodes of the network can be regarded as equal, which results in a high scalability. Moreover, the required signaling is significantly reduced as compared with hierarchical approaches known in prior art, as no specific signaling for leader election or hierarchy establishment is required. Compared with standard IPv6 SLAAC, only the PBR-header has to be added, which contains a specification of the geographic target area for which the signaling message broadcasted by the attachment point possesses validity. Apart from that the invention can be applied in an IPv6 environment without any changes in the IPv6 behaviour being required.

According to a preferred embodiment the position-based routing protocol is implemented at sub-IP protocol layer. More specifically, the position-based routing protocol may be implemented between the L2 MAC (Media Access Control) layer and the L3 IP layer. In communication nodes receiving a signaling message, the position-based routing protocol delivers the IP header of the signaling message to the upper IP layer only if the current geographic position of the node is within the target area specified in the PBR-header. The IP layer may then process the signaling message according to standard IPv6 SLAAC in order to configure its IP address.

In an advantageous embodiment the position-based routing protocol provides a message caching mechanism. Specifically, the caching functionality may be provided by the lower routing protocol implementation. The message caching mechanism may be employed by communication nodes which have received a signaling message to redistribute the signaling message to other communication nodes within the geographic area. More specifically, communication nodes within a certain geographic area can employ the caching mechanism to cache the last received signaling message. The cached signaling message may then be used to forward it to newcomer communication nodes entering the geographic area. By this means the latency for newcomer nodes is significantly reduced as they do not have to wait for the next signaling messages being broadcasted by the attachment point after their entry into the specific geographic area.

Advantageously, the geographic areas are specified as non-overlapping adjacent areas. Such implementation guarantees that in each specified geographic area a single unique network prefix is disseminated by means of the signaling messages broadcasted by the attachment point associated with the geographic area. Furthermore, a non-overlap of the specified geographic areas results in an improved handover performance for IP Mobility as moving communication nodes experience a clean sub-network change when leaving one geographic area and joining another one.

With respect to a high manageability a specification of the geographic areas as areas having a rectangular form proves to be advantageous. However, different geographic forms, e.g. circles, rhombi, etc. are also possible. In particular, the geometric form and size of the geographic areas may be specified according to specific environmental conditions and may be, for instance, adapted to the specific local distribution of the attachment points of the ad hoc network.

It may be provided that the nodes within a geographic area perform a check to detect duplicate addresses. Duplicate addresses may occur due to the fact that communication nodes which use the same network prefix in their IP address (as they are positioned within the same geographic area) arbitrarily selected the same host part of the IP address. To make sure that the address is not already in use in the geographic area the check may be performed using the known DAD (duplicate address detection) procedure. The check may be executed adopting again the same geographic area as broadcast domain. It is to be noted that if MAC addresses are assumed unique - which in VANETs is generally true for liability reasons - and if the host part of the IPv6 address is generated from the MAC address - as specified by IPv6 SLAAC - the DAD test may be omitted.

In a specific embodiment the external network infrastructure includes the Internet, which is advantageous with respect to various onboard infotainment applications which become more and more popular. In addition, IP sub-networks may be assigned to specified geographic areas. This would allow for deployment of location-based applications through the Internet. In fact, public repositories (e. g. similar to DNS) providing the IP network prefix giving the geographic area can be efficiently implemented relying on the geographic partition. The IP network prefix associated to a certain area may be obtained by querying the repository.

In a preferred embodiment the attachment points of the ad hoc network act as access routers. Alternatively it is possible that the attachment points act as bridge which is directly attached to an access router. In this case the functionality of the attachment points may be taken over - in the case of VANETs - by the known so called Road Side Units (RSU).

There are several ways how to design and further develop the teaching of the present invention in an advantageous way. To this end, it is to be referred to the patent claims subordinate to patent claim 1 on the one hand and to the following explanation of preferred embodiments of the invention by way of example, illustrated by the figure on the other hand. In connection with the explanation of the preferred embodiments of the invention by the aid of the figure, generally preferred embodiments and further developments of the teaching will we explained.

In the drawings:
- Fig. 1: is a schematic view of a protocol stack related to an application of the method according to the invention in a VANET, and
- Fig. 2: is a schematic view of a specific application scenario of the method according to the invention in a VANET.

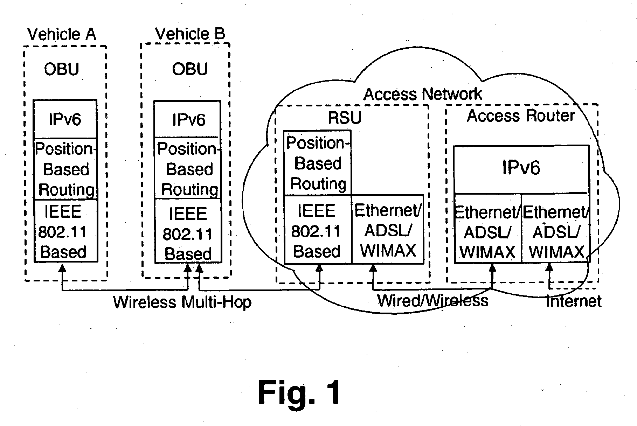

Fig. 1 shows a conceptual protocol stack for a specific application scenario of the method according to the invention. Fig. 1 depicts two communication nodes - vehicle A and vehicle B - which comprise an on-board unit OBU and which are enabled to communicate over wireless multi-hop links with dedicated Road Side Units RSU. One RSU is shown exemplarily, which is part of an access network and acts as a bridge which is attached via a wired or wireless connection to an access router AR. The access router AR provides access to an infrastructure network like e.g. the Internet.

In conventional IPv6 SLAAC, access routers periodically broadcast on their served link signaling messages, so called router advertisement RA messages, containing the network prefix assigned to the link. Receiving communication nodes create an IPv6 address by appending their hardware identifier to the prefix contained in the RA and then perform DAD to make sure that the address is not already in use in the link.

According to the invention a position-based routing protocol is implemented for forwarding the RAs of an attachment point to the communication nodes which are located in the specified geographic area which is associated with the respective attachment point. In the specific embodiment shown in Fig. 1, the position-based routing protocol is implemented as sub-IPv6 protocol layer, or more specifically between the layers IEE802.11-based MAC and IPv6. The road side unit RSU which acts as a bridge attached to the access router AR functions as attachment point to which a specified geographic area is associated. The road side unit RSU periodically sends out IPv6 router advertisements RA. These messages are addressed to all communication nodes which are on-link at IPv6 layer within the according geographic area. The mapping of the IPv6 layer to predefined geographic areas is performed at sub IP layer. In receiving communication nodes the position based routing protocol (implemented at L2.5 layer) delivers the IPv6 header of the RAs to the upper IPv6 layer. At the upper IPv6 layer the RA is processed by the communication node, i. e. the network prefix is extracted and the communication node's host part derived from its MAC address is added in order to configure an IP address. If adequate, in particular if MAC addresses can not be assumed to be unique within the geographic area, a duplicate address detection (DAD) is performed.

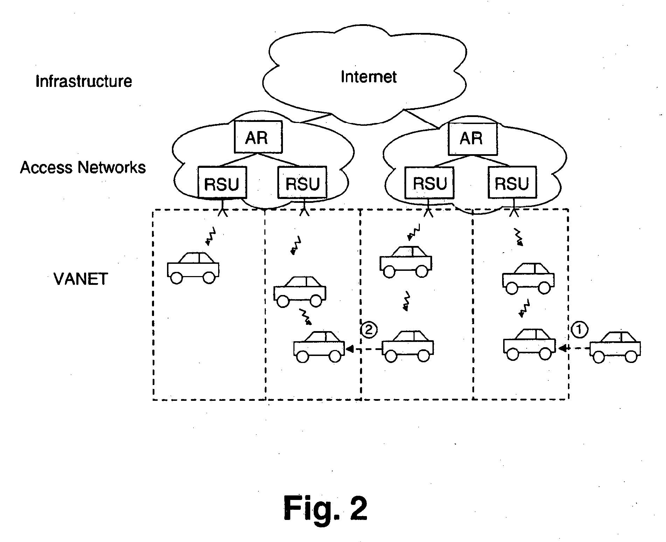

Fig. 2 is a schematic illustration of a dynamic application scenario of the method according to the invention in a VANET. Fig. 2 shows four non-overlapping adjacent rectangular geographic areas, each geographic area being associated with a road side unit RSU. The road side units RSU function as attachment points and act as a bridge which is directly attached to an access router AR. In the specific embodiment shown in Fig. 2, two road side units RSU are attached to one access router AR. However, in practical scenarios the number of road side units RSU attached to an access router AR will range from one single RSU to a multiple of RSUs. Moreover, it is possible that the access router AR itself functions as access point to which a geographic area is associated directly.

When a moving communication node (i.e. a vehicle) enters a geographic area served by an attachment point, as shown in case 1 on the right side of Fig. 2, the vehicle receives routing advertisements (RAs) via multi-hop geocast distribution. The position-based routing protocol delivers the IPv6 header of the RA to the upper IPv6 layer. There the communication node extracts the network prefix, appends its hardware identifier to the prefix, thereby generating its IP address.

In order to reduce latency it is provided that vehicles already in the geographic area cache the last received RA and forward it to a newcomer vehicle. According to case 1 of the embodiment shown in Fig. 2 this means that the vehicle entering the geographic area does not have to wait until the RSU broadcasts the next RA which is then forwarded multi-hop based on a geocast protocol to the vehicle. Instead it receives the RA from the vehicle already located in the geographic area which has cached the last received RA and forwards it to the entering vehicle.

In the case of vehicles moving between geographic areas served by road side units RSU belonging to different IPv6 subnets (e.g. attached to different access routers AR, as depicted in Fig. 2, case 2) the geographic partition significantly improves layer 3 handover procedures. In fact, geographic addressing provides filtering of non-relevant RAs, so that vehicle experience a sharp sub-network change facilitating Mobile IP Movement Detection procedures.

Many modifications and other embodiments of the invention set forth herein will come to mind the one skilled in the art to which the invention pertains having the benefit of the teachings presented in the foregoing description and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Method for automatic address configuration in a mobile ad hoc network, MANET, wherein the network comprises one or more mobile communication nodes, the mobile communication nodes being aware of their geographic position, as well as multiple attachment points providing access to an external network, and wherein the attachment points broadcast IP, Internet Protocol, signaling messages containing the network prefix assigned to their served link,
**characterized in that** geographic areas are specified, each of said geographic areas being associated with at least one of said attachment points,
wherein a position-based routing protocol is implemented for forwarding the signaling messages broadcasted by the attachment points to the communication nodes within the corresponding geographic area, said position-based routing protocol being implemented at sub-IP protocol layer between the MAC, Media Access Control, layer and the IP layer; and
wherein a communication node generates an IP address on the basis of the network prefix contained in the received signaling message by appending a communication node's host part derived from said communication node's MAC address.

2. Method according to claim 1, wherein the position-based routing protocol provides a message caching mechanism.

3. Method according to claim 1 or 2, wherein communication nodes having received the signaling message redistribute the signaling message to other communication nodes within the geographic area.

4. Method according to any of claims 1 to 3, wherein the geographic areas are specified as non-overlapping adjacent areas.

5. Method according to any of claims 1 to 4, wherein the geographic areas are specified as areas having a rectangular form.

6. Method according to any of claims 1 to 5, wherein the communication nodes within a geographic area perform a check to detect duplicate addresses.

7. Method according to any of claims 1 to 6, wherein said external network infrastructure includes the Internet.

8. Method according to any of claims 1 to 7, wherein IP sub networks are assigned to the specified geographic areas.

9. Method according to any of claims 1 to 8, wherein the attachment points act as access routers.

10. Method according to any of claims 1 to 8, wherein the attachment points act as a bridge attached to an access router.

## Patentansprüche

1. Verfahren zur automatischen Adresskonfiguration in einem mobilen Ad-hoc-Netzwerk, MANET, wobei das Netzwerk einen oder mehrere mobile Kommunikationsknoten, die Kenntnis von ihrer geographischen Position haben, sowie mehrere Anschlusspunkte, die Zugang zu einem externen Netzwerk bereitstellen, umfasst, und wobei die Anschlusspunkte IP, Internet Protocol, Signalisierungsnachrichten senden, welche das Netzwerk-Präfix enthalten, das dem Link, den sie bedienen, zugewiesen ist,
**dadurch gekennzeichnet, dass** geographische Bereiche spezifiziert werden, wobei jeder der geographischen Bereiche mit mindestens einem der Anschlusspunkte assoziiert ist,
wobei ein positionsbasiertes Routing-Protokoll für die Weiterleitung der von den Anschlusspunkten an die Kommunikationsknoten innerhalb des entsprechenden geographischen Bereichs gesendeten Signalisierungsnachrichten implementiert ist, wobei das positionsbasierte Routing-Protokoll auf Sub-IP-Protokollschicht zwischen der MAC, Media Access Control, Schicht und der IP-Schicht implementiert ist, und
wobei ein Kommunikationsknoten eine IP-Adresse auf der Basis des in der empfangenen Signalisierungsnachricht enthaltenen Netzwerk-Präfix durch Anhängen eines von der MAC-Adresse des Kommunikationsknotens abgeleiteten Host-Teils des Kommunikationsknotens erzeugt.

2. Verfahren nach Anspruch 1, wobei das positionsbasierte Routing-Protokoll einen Nachrichten-Caching-Mechanismus bereitstellt.

3. Verfahren nach Anspruch 1 oder 2, wobei Kommunikationsknoten, die die Signalisierungsnachricht empfangen haben, die Signalisierungsnachricht an andere Kommunikationsknoten innerhalb des geographischen Bereichs weiter verbreiten.

4. Verfahren nach einem der Ansprüche 1 bis 3, wobei die geographischen Bereiche als nicht-überlappende benachbarte Bereiche spezifiziert sind.

5. Verfahren nach einem der Ansprüche 1 bis 4, wobei die geographischen Bereiche als Bereiche mit einer rechteckigen Form spezifiziert sind.

6. Verfahren nach einem der Ansprüche 1 bis 5, wobei die Kommunikationsknoten innerhalb eines geographischen Bereichs eine Überprüfung durchführen, um doppelte Adressen zu erkennen.

7. Verfahren nach einem der Ansprüche 1 bis 6, wobei die externe Netzwerkinfrastruktur das Internet umfasst.

8. Verfahren nach einem der Ansprüche 1 bis 7, wobei IP-Teilnetze den spezifizierten geographischen Bereichen zugeordnet sind.

9. Verfahren nach einem der Ansprüche 1 bis 8, wobei die Anschlusspunkte als Zugangsrouter arbeiten.

10. Verfahren nach einem der Ansprüche 1 bis 8, wobei die Anschlusspunkte als eine an einen Zugangsrouter angeschlossene Brücke wirken.

## Revendications

1. Procédé de configuration d'adresses automatique dans un réseau *ad hoc* mobile, MANET, dans lequel le réseau comprend un ou plusieurs noeuds de communication mobiles, les noeuds de communication mobiles ayant connaissance de leur propre position géographique, ainsi que de multiples points de rattachement fournissant un accès à un réseau externe, et dans lequel les points de rattachement diffusent des messages de signalisation de protocole Internet, IP, contenant le préfixe de réseau affecté à leur liaison desservie ;
**caractérisé en ce que** des zones géographiques sont spécifiées, chacune desdites zones géographiques étant associée à au moins l'un desdits points de rattachement ;
dans lequel un protocole de routage basé sur la position est mis en oeuvre en vue d'acheminer les messages de signalisation diffusés par les points de rattachement vers les noeuds de communication situés au sein de la zone géographique correspondante, ledit protocole de routage basé sur la position étant mis en oeuvre au niveau d'une couche de protocole sous-IP située entre la couche de contrôle d'accès au support, MAC, et la couche de protocole IP ; et
dans lequel un noeud de communication génère une adresse IP sur la base du préfixe de réseau contenu dans le message de signalisation reçu, en annexant une partie d'hôte du noeud de communication dérivée de l'adresse MAC dudit noeud de communication.

2. Procédé selon la revendication 1, dans lequel le protocole de routage basé sur la position fournit un mécanisme de mise en mémoire cache de messages.

3. Procédé selon la revendication 1 ou 2, dans lequel des noeuds de communication ayant reçu le message de signalisation redistribuent le message de signalisation à d'autres noeuds de communication situés au sein de la zone géographique.

4. Procédé selon l'une quelconque des revendications 1 à 3, dans lequel les zones géographiques sont spécifiées en tant que de zones adjacentes sans chevauchement.

5. Procédé selon l'une quelconque des revendications 1 à 4, dans lequel les zones géographiques sont spécifiées en tant que des zones présentant une forme rectangulaire.

6. Procédé selon l'une quelconque des revendications 1 à 5, dans lequel les noeuds de communication au sein d'une zone géographique mettent en oeuvre une vérification destinée à détecter des doublons d'adresses.

7. Procédé selon l'une quelconque des revendications 1 à 6, dans lequel ladite infrastructure de réseau externe inclut Internet.

8. Procédé selon l'une quelconque des revendications 1 à 7, dans lequel des sous-réseaux IP sont affectés aux zones géographiques spécifiées.

9. Procédé selon l'une quelconque des revendications 1 à 8, dans lequel les points de rattachement agissent en qualité de routeurs d'accès.

10. Procédé selon l'une quelconque des revendications 1 à 8, dans lequel les points de rattachement agissent en qualité de pont rattaché à un routeur d'accès.
